# EUROPEAN PATENT APPLICATION

(11) **EP 0 688 651 A1**
(43) Date of publication of application: **27.12.1995**
(21) Application number: 95201671.5
(22) Date of filing: 20.06.1995
(51) Int. Cl.: B29C 45/04, B29C 45/06, B29C 45/16, B29C 45/17

(54) **Injection molding machine and method for manufacturing hollow plastic articles**

(30) Priority: 20.06.1994 NL 9401007
(71) Applicant: INTER TOOLING SERVICES B.V., NL-7825 VG Emmen (NL)
(72) Inventor: Van Manen, Dirk, NL-7751 GM Dalen (NL); Albers, Hendrikus Johannes Theodorus, 7751 GK Dalen (NL)
(74) Representative: Smulders, Theodorus A.H.J., Ir.

(57) **Abstract**

Injection molding apparatus comprises a mold with a first part (2) having a number of cavities (3) and a second part (4) having a number of cores (5,5'). In the closed condition of the mold the cores reach into the cavities for forming an injection molding cavity. In an open position of the mold the cores are entirely clear of the cavities. One mold part (4) has an additional set of cores (5') or cavities which can cooperate with corresponding receiving means (20) of a robot (15) during the time when the other set of cores (5) or cavities cooperate with the other mold part (2) for injection molding the articles. The mold part (4) comprising the additional set of cores or cavities is movable in such a manner that the set of cores or cavities during successive injection molding cycles alternately cooperate with the other mold part and with a robot. Also disclosed is a method for operating such an injection molding apparatus.

## Description

### BACKGROUND OF THE INVENTION

This invention relates to an injection molding apparatus for manufacturing hollow plastic articles, equipped with a mold having a first and a second mold part, of which at least one mold part is movable back and forth in an opening direction and a closing direction relative to the other mold part between two relative positions which define an open and a closed condition of the mold, wherein the first mold part comprises a set of cavities, the second mold part comprises a set of cores which in the closed condition project in the closing direction into the cavities and in the open position are entirely clear of the cavities, and the mold is arranged so that during the opening of the mold one of the two mold parts carries the formed articles.

The invention further relates to a method for injection molding hollow articles, wherein during a cycle of the method plastic is injected into a mold cavity bounded by the closed mold, thereafter at least the one mold part is moved in an opening direction away from the other mold part until the opened position of the mold is reached, the formed articles moving along with one of the mold parts, the formed articles are transferred to receiving means of a receiving device for receiving the articles (generally called "robot") and finally at least the one mold part is moved in a closing direction directed opposite to the opening direction towards the other mold part until the closed position of the mold is reached, so that the mold is ready for injecting a next charge.

Such injection molding apparatuses and methods are used inter alia for manufacturing "preforms", as they are normally called in the relevant art, of bottles from plastic, for instance PET. After the mold cavities have been filled with plastic, the plastic in the cavity is held under pressure (afterpressure) for a short time to ensure a good product. After a cooling period the mold is opened, whereby at least one of the mold parts moves away from the other mold part, whereby the cores are displaced from the cavities. In the opened condition of the mold, the robot is brought between the mold parts to take over the newly formed, still hot preforms and transfer them to a cooling station. Then the mold can be closed again and a new injection molding cycle can be initiated.

Since such injection molding apparatuses are very costly, it is endeavored to make use of the injection mold apparatuses as efficiently as possible. This can be effected by arranging for a shortest possible cycle time. In this connection, 'cycle time' is understood to mean the time passing, in continuous operation, between the starting time of the feed of plastic to the mold for producing a first load of articles and the starting time of the feed of plastic for a next load of articles.

To a considerable extent the length of the cycle time is determined by the cooling period following injection and afterpressure and preceding the opening of the mold. In a modern injection molding apparatus for preforms the cooling period can be of the order of one-third of the total cycle time.

The object of the invention is to make available an efficient, simple and reliable injection molding apparatus and process by which a short cycle time and in particular a short cooling time in the mold can be realized.

### SUMMARY OF THE INVENTION

According to the invention, an injection molding apparatus of the above-described type is characterized in that the one mold part (which carries the formed articles after opening of the mold following an injection molding cycle) comprises at least one additional set of cores or cavities, the apparatus further comprises at least one robot comprising a set of receiving means which in a first operating condition cooperate with the additional set of cores or cavities when the other set of cores or cavities of the one mold part cooperate with the cavities and cores, respectively, of the other of the two mold parts, and at least the one mold part is moreover movable relative to the other mold part in such a manner that in different operating conditions alternately different sets of the sets of cores or cavities of the one mold part cooperate alternately with the other mold part and with the receiving means of the robot or of one of the robots.

The invention further provides that in a method of the above-described type, during the injection of plastic into the mold, the articles carried by the additional set of cores or cavities are cooled between the receiving means and the additional set of cores or cavities; during the moving away of the one mold part from the other mold part, the articles formed during a preceding cycle are transferred from the additional set of cores or cavities to the receiving means; during the displacement of the cores or cavities carrying the formed articles in a direction transverse to the opening direction, at least a number of the additional cores or cavities, whence articles have been transferred to at least a number of the receiving means during this or a preceding cycle, are displaced in a direction transverse to the opening direction into a position opposite the cavities and cores, respectively, of the other mold part and, during the movement of at least the one mold part to the other mold part in a direction opposite to the opening direction, the set of cores or cavities which carry a set of articles formed during this cycle is moved until a position of cooperation with at least a number of the receiving means of the robot or robots has been reached.

### BRIEF DESCRIPTION OF THE DRAWINGS

Fig. 1 is a diagrammatic, partly cutaway top plan view of a part of an injection molding apparatus according to a first exemplary embodiment of the invention in opened position;
Fig. 2 is a view similar to Fig. 1, in which the injection molding apparatus is in closed condition;
Fig. 3 is a perspective overall view of the injection molding apparatus according to Figs. 1 and 2;
Fig. 4 is a diagrammatic, partly cutaway view of a part of an injection molding apparatus according to a second exemplary embodiment of the invention in the opened position;
Fig. 5 is a view similar to Fig. 4, in which the injection molding apparatus is in closed condition;

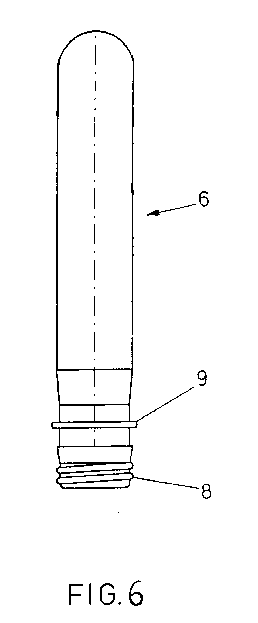

Fig. 6 is a diagrammatic view of an example of a preform;
Fig. 7 is a diagrammatic front view of a machine plate of an injection molding apparatus according to a third exemplary embodiment of the invention; and
Fig. 8 is a diagrammatic, partly cutaway side elevation of a mold with a mold part as shown in Fig. 7.

### DETAILED DESCRIPTION

In the drawings corresponding parts of apparatuses according to different exemplary embodiments are designated by identical reference numerals.

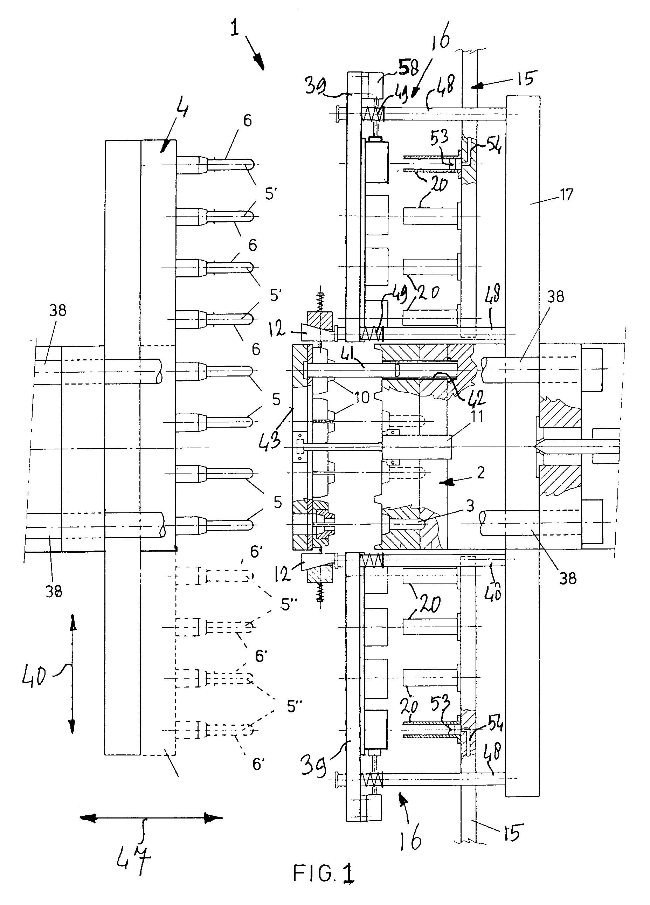

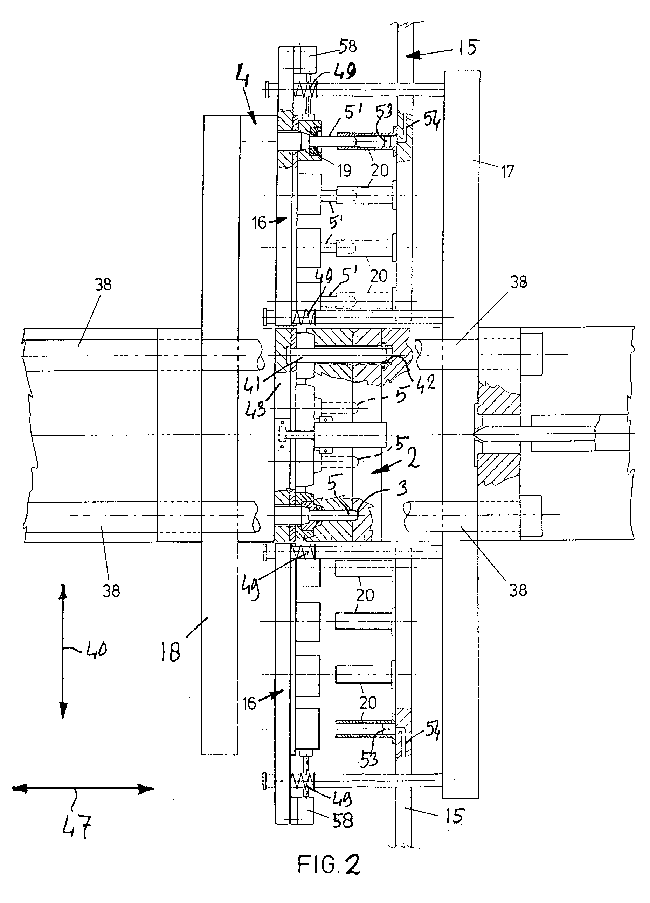

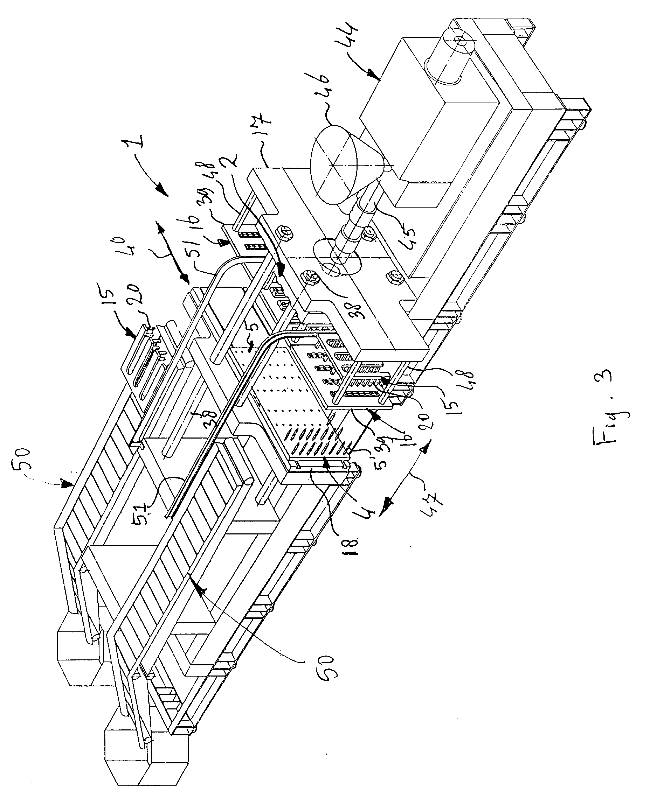

Figs. 1 and 2 show the parts of an injection molding apparatus 1 which are most important for the present invention, while in Fig. 3 an example of such an injection molding apparatus is shown in its entirety. This embodiment of the invention is preferred most. The injection molding apparatus 1 according to this exemplary embodiment comprises a mold with a first mold part 2 having one or more cavities 3. The mold part 2 is mounted on a frame or machine plate 17 which in this example is mounted stationarily. The cavities 3 of the first mold part 2 extend in a direction transverse to the machine plate 17 and are open on the side remote from the machine plate 17. Although the elevations of Figs. 1 and 2 are top plan views, they could also be side elevations or oblique top or bottom views, if the injection molding machine had been given a basic configuration tilted relative to the apparatus shown.

The cavities 3 are arranged in a matrix of one or more rows of four cavities. In the closed position of the mold, hot liquid plastic can be supplied to the cavities 3. To that end, the injection molding apparatus comprises a plasticizing unit 44, known per se, with a conveyor and plasticizing screw 45 which communicates with a hopper 46 via which granulate, in the case of bottles for instance PET, polypropene, polycarbonate, or the like, can be supplied.

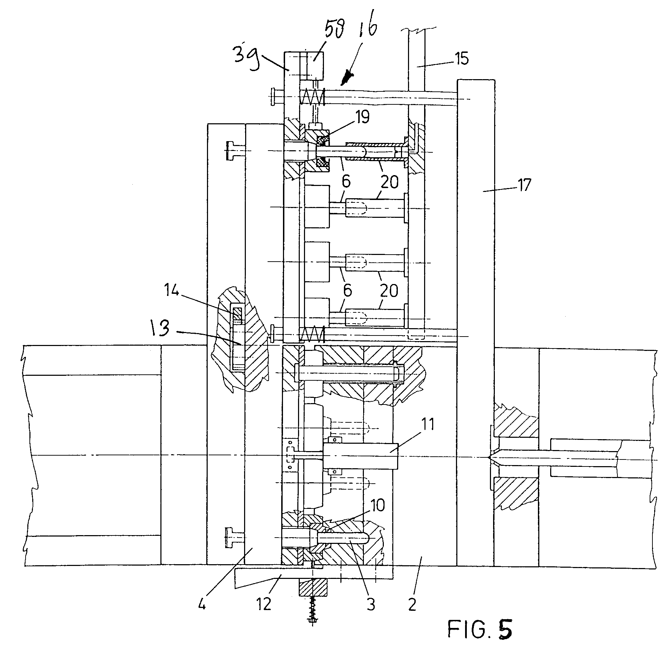

Located opposite the first mold part is a second mold part 4 made up of a core plate with cores 5, 5' projecting from that core plate. For the sake of clarity, in Fig. 3 only a number of the cores 5, 5' are shown. Of the other cores, which are not shown, in Fig. 3 only the mounting points are indicated. The second mold part 4 is mounted on a second frame or machine plate 18. Mounting surfaces of the machine plates 17 and 18 extend parallel to each other. A number of the cores 5 are located opposite the cavities 3 and the mold parts 2, 4 can move in the opening and closing direction (double arrow 47) to and away from each other between an open position of the mold (Figs. 1 and 3) and a closed position of the mold (Fig. 2), in which the cores 5 reach into the cavities 3. When the cores 5 reach into the cavities 3, a space remains around each core 5, into which plastic can be injected for forming an injection molded product, such as for instance a preform 6 for a bottle as shown in Fig. 5. To close the injection molding cavities and for forming the neck portion 7 with screw thread 8 and flange 9, openable and closable neck rings 10 are present in the first mold part 2. The neck rings 10 are located in a strip or neck ring plate 43, which in this example can be moved by means of a hydraulic cylinder 11 from and to the first mold part 2. By means of a guide formed by pins 42 sliding in bores 41 the neck ring plate 43 is suspended and guided relative to the first mold part. Further, at 12 drive-out wedges for the neck rings 10 are indicated.

In accordance with the invention, the second mold part 4 comprises, in addition to the cores 5 situated in line with the cavities 3, the further cores 5', which in the present example form the second set of cores 5'.

The cores 5 and the further cores 5' can be alternately brought into the cavities 3 in successive cycles. The mold part 4 can to that effect slide back and forth in directions indicated by a double arrow 40.

In Fig. 1 the further cores 5' carry previously formed preforms 6. In Fig. 1 the cores 5 are ready to be slid into the cavities 3 and are therefore empty.

The additional cores 5' are so positioned that if the cores 5 are slid into the cavities 3, the cores 5' with the preforms 6 slide into receiving means 20 of one of two robots 15. These robots 15 are located next to the first mold part on opposite sides. According to the example shown, the receiving means 20 are designed as tubes bounding receiving cavities into which the formed articles fit fairly accurately.

As appears most clearly from Fig. 3, the receiving means 20 of the robots 15 are movable between a first position for cooperation with the cores 5 or 5' of the first mold part 4 and a second position for cooperation with a discharge and collecting unit 50.

The robots 15 in this example are each equipped with a rail 51 for guiding the receiving means 20 between the two positions described. The rails each extend vertically in part and merge into a part extending horizontally away from the mold parts 2, 4 and above the mold parts. This configuration of the rails, and therefore of the paths along which the robots 15 move in operation, provides the advantage that a slender apparatus without projecting wings is obtained, which occupies little space. Further, the slender construction of the injection molding apparatus enables an efficient factory lay-out in that several supply ends of injection molding apparatuses can be directed to one common side and the discharge ends of the apparatuses can terminate on a common opposite side.

The receiving means 20 are provided with passages 53 which communicate via channels 54 with a reduced pressure source. Thus the preforms 6 can be held in the tubes 20 in simple manner. The reduced pressure also causes an air displacement which supports the cooling of the tubes 20. If the preforms fit into the tubes with a slight clearance or the tubes are provided with grooves, then, when the preforms extend into the tubes, due to the reduced pressure, air is forced along the preforms, which further accelerates the cooling of the preforms. Of course, this principle can also be applied if the formed articles are slid over the receiving means. Preferably, the extraction of air should then occur mainly via free ends of the receiving means.

In front of (as viewed in the opening direction) the robots 15 is located a stripping unit 16. In this example the stripping units 16 are both mounted on the same stationary machine plate 17 as the first mold plate 2. The stripping units 16 are each provided with a guide formed by rods 48 and a stripper plate 39 slidable along the guide 48 over a limited distance. In this example the stripper plates 39 are each provided with stripper strips 19, hydraulically operable by a cylinder 58, each in a position corresponding with the position of one of the cores 5' on the core plate 4 of the second mold part 4.

The stripper plates are each coupled to springs 49, of which one end is fixedly connected to one of the guides, so that the stripper plates 39 upon displacements along the guide 48 are each time returned to their starting position.

The apparatus shown operates as follows. After filling of the injection molding cavities of the closed mold and after applying afterpressure, the mold is opened, whereby the still hot preforms are carried along on the cores 5. Upon opening of the mold, the previously formed articles 6 on the cores 5' are stripped off the cores 5' by the stripping strips 19, so that they remain behind in and therefore are transferred to the tubes 20 of the robot 15 located opposite the set of cores 5'.

Due to the elastic suspension of the stripper plates 39 the preforms 6 are arrested only after they have moved over some distance along with the second mold part 4, away from the first mold part 2. As a result, the opening of the mold proceeds in a flowing motion and shocks upon opening the mold when at the same time the newly formed preforms are released from the cavities 3 are avoided. During release of the preforms 6 clamped under bias in the cavities 3, the mold is additionally sensitive to eccentric loads, such as the loads caused by the stripping, because even a very minor rotation of the mold parts relative to each other leads to considerably higher release forces. Once the preforms have been released from the cavities 3 and the second mold part 4 has gained speed, a momentary additional load caused by the stripping of the preforms does not constitute any problem.

In the time interval following the transfer of the articles 6 and lasting until the supply of a next set of articles to that robot 15, the robot 15 is moved to a delivery position, where the articles 6 are delivered. Within the framework of the available time and taking into account the requirement that the robot 15 must be back in the original cooling and take-over position for cooling and receiving a next set of articles, the articles are preferably held by the robot 15 as long as possible, in order to achieve maximum form retention of the articles at the time of ejection.

After the preforms have come clear of the cavities 3, the second mold part 4 is shifted into the position shown in broken lines in Fig. 1 and in solid lines in Fig. 3. The positions of the cores in this other position of the second mold part 4 are designated in Fig. 1 by the reference numeral 5''. Per cycle the core plate is alternately slid from one position into the other and back again, as indicated by the arrow 40. When the set of cores 5 (in one position) or 5'' (in the other position), viewed in the opening and closing direction 47, have been aligned with the tubes 20 of the relevant robot 15, the other set of cores 5' is in line with the cavities 3 of the first mold part 2. The mold is now closed again, whereafter simultaneously articles are formed in the mold and the previously formed articles are further cooled on the cores, with cooling being enhanced by heat transfer to the tubes 20. If desired, the tubes themselves can also be cooled, for instance by circulating cooling liquid or gas through channels in the tubes.

Each load of preforms which has been formed during an injection molding cycle can therefore be cooled during the next cycle in a receiving element 20 of the robot 15. The cooling time of the preforms in the closed mold as required in the traditional process can thus be dispensed with at least for a large part. The cooling period is in fact transferred outside the cycle time, so that the cycle time can be shortened considerably.

A further advantage of the apparatus described is that no special stripping unit is necessary which after the opening of the mold must be slid over the cores to slide the preforms off the cores. In the apparatus described, stripping occurs simply by arresting the preforms 6 when the mold is being opened and, accordingly, the additional cores 5' are moved out of the robot 15.

In the apparatus according to the exemplary embodiment of Figs. 1-3, the preforms are moreover alternately received by one and the other robot 15 and cooled for the duration of a cycle time and then discharged. Because two robots are present, at a given cycle time relatively much time is available for further cooling and discharging the products as well as for the return of the robots 15 to the cooling and transfer position. This exemplary embodiment of the invention is particularly suitable for use in machines provided with guide beams, such as 38, because the set of cores with the articles can move between the beams 38. Existing machines too can simply be converted to a machine according to Figs. 1-3.

The articles' moving along with the second mold part 4 during the opening of the mold is effected by initially allowing the neck rings 10, during the opening of the mold, to move over some distance along the guide 41, 42 along with the second mold part 4. Shortly before the movement along with the second mold part 4 stops, the neck rings 10 are operated by the drive-out wedges 12, so that they release the neck portions of the preforms 6 and the preforms 6 remain behind on the cores 5 when the movement of the neck rings 10 relative to the first mold part 2 stops.

Because the plate 39 with the neck rings 10 is carried by the first mold part 2 and is not mounted, as is usual, on the moving second mold part 4, the second mold part 4, to be moved in the opening and closing direction 47 and in lateral direction, can be made of relatively light construction. As a result, the driving force required for driving the movements of the second mold part 4 is limited and the cycle time can be limited, without the accelerations and decelerations of the second mold part 4 leading to overloading of the supporting structure of the apparatus. Further, one end of the hydraulic cylinder 11 for driving displacements of the neck ring plate 39 is arranged stationarily, so that it is not necessary that hydraulic pressure lines connected to that cylinder 11 (not shown) follow the movements of a mold part and so these lines can be of shorter and simpler design and can have a longer life.

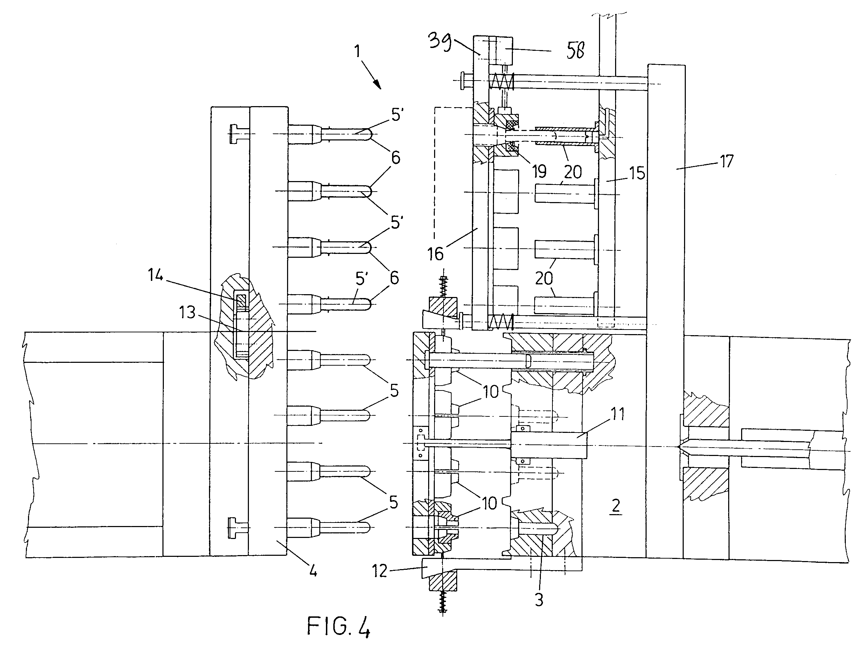

Figs. 4 and 5 show an alternative exemplary embodiment, in which the mold part 4 can rotate about a shaft 13. For rotation, for instance a hydromotor or a different type of motor may be provided, optionally having a suitable gearwheel or rack-and-pinion transmission 14. A combination of sliding movement and rotation is also possible, depending on the configuration of the injection molding apparatus.

When the cores are clear of the cavities, the plate 4 is rotated about the shaft 13, so that the cores 5 assume the previous position of the cores 5' and the cores 5' end up in a position opposite the cavities 3. Then the mold is closed, the newly formed, still hot preforms 6 being slid into the tubes 20 of the robot 15, as can be seen in Fig. 5. The preforms 6 can then cool further in the robot 15. When thereafter the mold is opened again, the stripping means 19 are energized. While the cores 5' move away from the robot 15, the preforms 6 remain behind in the robot 15. The robot arm then moves out of the machine to deliver the preforms, which have meanwhile cooled further, to a cooling conveyor or the like, the robot in this example moving slightly backwards and then laterally, upwards or downwards. The robot can also move along a circular path and may or may not make a rotary movement.

Meanwhile the second mold part 4 rotates, so that the newly formed preforms 6 in their turn end up opposite the robot 15 and are slid into the tubes 20 of the robot which has returned again, as soon as the mold is closed again.

The invention can also be applied in an injection molding apparatus and a method for the two-step manufacture of products from two different materials. This technique is for instance important for packages of foods, because it makes it possible to manufacture the main structure of the product from recycled material and to manufacture a layer of the product that will come into contact with the food to be packaged from new material, whose composition and hygienic properties are controlled within narrow limits.

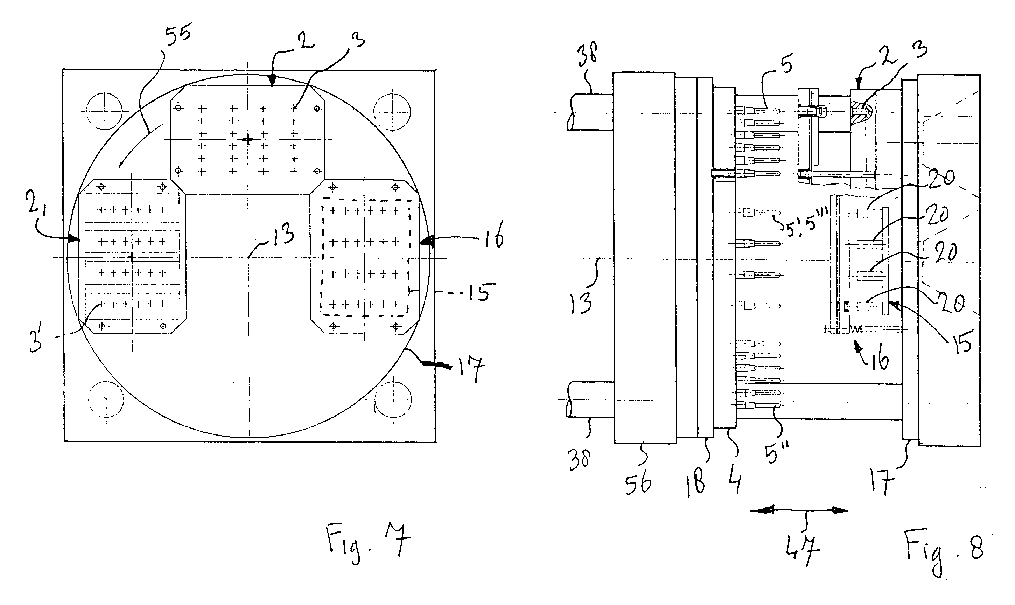

The injection molding apparatus according to Figs. 7 and 8 comprises a stationary machine plate 17 which carries two mold parts 2, 2' with cavities 3, 3'. The cavities 3 of the one mold part 2 are narrower than the cavities 3' of the next mold part 2'. For clarity, of each set of cavities 3, 3' only one has been provided with a reference numeral. Locate opposite the stationary machine plate 17 is a machine plate 18 which is rotatable in a sense indicated in Fig. 7 with an arrow 55, about a shaft 13 parallel to the opening and closing direction 47 of the mold. Mounted on the rotatable machine plate 18 is a second mold part 4 which according this example is provided with a first, a second, a third and a fourth set of cores 5, 5', 5'' and 5''', respectively. The rotatable machine plate 18 is carried by a frame part 56, which is guided by guides 38. Opposite the third set of cores 5'' no tool is located in the position shown. In the depicted position of the third set of cores 5'', the products are cooled. Located opposite the fourth set of cores 5''' is a robot 15 with receiving means 20. Located between the robot 15 and the third set of cores 5''' is a stripping unit 16 which in this example is essentially the same as the stripping unit according to Figs. 1-3.

In Fig. 8 the mold is shown in the opened condition, with the first set of cores 5 and the second set of cores 5' clear of the cavities 3, 3' and, viewed in the closing direction 47, located in a position in line with the cavities 3, 3', respectively.

In operation, the apparatus according to Figs. 7 and 8 operates as follows. From the position shown, the mold is closed in closing direction 47, until the mold parts 2 and 4 abut against each other, the first set of cores 5 reaching into the cavities 3 of the one mold part 2 and the second set of cores 5' having thereon the semifinished products formed during the preceding pass reaching into the cavities 3' of the next mold part 2'.

Then, approximately simultaneously, a first material is injected into the form cavities between the first set of cores 5 and the first set of cavities 3, and a second material into the form cavities between the second set of cores 5' and the next set of cavities 3'. Because the second set of cavities 3' is more spacious than the first set of cavities 3, another layer of the second material is formed around the semifinished products on the cores 5'.

Located on the third set of cores 5'' are a corresponding number of articles completed during the previous pass and cooling during this machine pass.

Located on the fourth set of cores 5''' are a corresponding number of articles completed during the previous pass and cooling further during this machine pass between the cores 5''' of the fourth set and the receiving means. The articles are simultaneously cooled from the outside by the receiving means 20 and from the inside by the cores 5''', which promotes fast cooling.

Then the machine plates 17 and 18 with the mold parts 2, 2' and 4 mounted thereon are moved away from each other again, so that the mold is opened. By arresting the articles by means of the stripping unit 16 during the opening of the mold, they are in a simple manner transferred from the cores 5''' of the fourth set to the receiving means 20. The receiving means 20 of the robot 15 are then displaced to a delivery position (not shown), where the articles are delivered.

The rotatable machine plate 18 is then rotated through an angle of 90°. As a result, the first set of cores 5 are brought opposite the next mold part 2'', where after the closure of the mold the second layer of material can be formed on. The second set of cores 5' is thereby brought into the position for allowing the completed articles to cool; the third set of cores 5'' is brought into a position opposite the stripping unit 16 and the robot 15. The fourth set of cores 5''', which have meanwhile been emptied, is thereby brought into a position opposite the first mold part 2 for re-starting the cycle of forming articles around the cores.

It is noted that after the foregoing, various modifications will readily occur to a skilled person. For instance, if desired a multiple robot can be used. It would also be conceivable that, conversely, the mold part with the cavities is of movable and double design. The robot should then be provided with core-shaped parts. Further, the machine can also be used for the production of other articles than preforms. These and similar modifications are understood to fall within the framework of the invention.

## Claims

1. An injection molding apparatus for manufacturing hollow plastic articles, comprising a mold having a first and a second mold part, of which at least one mold part is movable back and forth in an opening direction and a closing direction relative to the other mold part between two relative positions which define an open and a closed condition of the mold, wherein:
the first mold part comprises a set of cavities;
the second mold part comprises a set of cores which in said closed condition project in the closing direction into said cavities and in said open position are entirely clear of the cavities;
the mold is arranged so that during the opening of the mold one of said two mold parts carries the formed articles;
said one mold part comprises at least one additional set of cores or cavities;
the apparatus further comprises at least one robot comprising a set of receiving means which in a first operating condition cooperate with the additional set of cores or cavities when the first-mentioned set of cores or cavities of said one mold part cooperate with the cavities and cores, respectively, of the other of said two mold parts; and
at least one of the mold parts is moreover movable relative to the other of the mold parts, in such a manner that in different operating conditions alternately different sets of said sets of cores or cavities of said one mold part cooperate with said other mold part and with the receiving means of the robot or of one of the robots.

2. An injection molding apparatus according to claim 1, wherein the first and the second mold part have facing surfaces and wherein at least said one mold part is suspended for back and forth sliding movement relative to said other mold part in a direction approximately parallel to the facing surfaces of the mold parts.

3. An injection molding apparatus according to claim 2, wherein the robots are located on opposite sides of said other mold part, which does not comprise additional cores or cavities.

4. An injection molding apparatus according to claim 1, wherein the first and the second mold part have facing surfaces and wherein said one mold part is suspended for rotation relative to said other mold part about a shaft extending transversely to the facing surfaces of the mold parts.

5. An injection molding apparatus according to claim 4, wherein said one mold part comprises at least three sets of cores or cavities and said other mold part comprises at least two sets of cavities or cores, wherein positions of the at least three sets of cores or cavities of the one mold part are uniformly distributed circumferentially about said shaft, and the at least two sets of cavities or cores of said other mold part are located in such a manner that during each machine pass they are located each in the direction of said shaft in line with one of the at least three sets of cores or cavities of said one mold part.

6. An injection molding apparatus according to any one of the preceding claims, wherein said one mold part comprises cores and an additional set of cores.

7. An injection molding apparatus according to any one of the preceding claims, further comprising a stripper plate comprising stripping elements, which stripper plate, in the opening direction of the mold, is located in front of the receiving means of the robot or at least one of the robots.

8. An injection molding apparatus according to claim 7, wherein the stripper plate is suspended passively.

9. An injection molding apparatus according to claim 7 or 8, wherein the stripper plate and said other mold part are suspended from a common, stationary frame.

10. An injection molding apparatus according to any one of claims 7-9, wherein the stripper plate is suspended in a guide which is stationary relative to said other mold part, said guide running parallel to the closing direction of the mold and wherein the stripper plate is coupled to a resilient element adapted for returning the stripper plate to its starting position after displacements of the stripper plate along the guide.

11. An injection molding apparatus according to any one of the preceding claims, wherein said other mold part carries a neck ring carrier comprising neck rings.

12. An injection molding apparatus according to claim 11, wherein the neck ring carrier is connected with said other mold part via a guide which runs parallel to the closing direction of the mold and comprises a stop which defines an extreme position of the neck ring carrier, remote from said other mold part, and the mold is equipped with means for urging the neck ring carrier away from said other mold part and with means for opening the neck rings when reaching said extreme position remote from the mold parts.

13. An injection molding apparatus according to any one of the preceding claims, wherein the receiving means of the robot or robots are movable between a first position for cooperation with cores or cavities of said one mold part and a second position for cooperation with an element for collecting formed articles.

14. An injection molding apparatus according to claim 13, wherein the receiving means of the robot or robots are movable in vertical direction from said first position.

15. An injection molding apparatus according to claim 14, wherein the robot is equipped with at least one rail for guiding the receiving means between said first position and said second position, the rail partly running vertically and merging into a portion extending horizontally away from the mold parts and above the mold parts.

16. An injection molding apparatus according to any one of claims 13-15, wherein the receiving means comprise passages which communicate with a reduced pressure source.

17. An injection molding apparatus according to any one of claims 13-16, wherein the receiving means comprise channels communicating with means for circulating a cooling fluid.

18. A method for injection molding hollow articles, utilizing an injection molding apparatus comprising a mold with a first and a second mold part, wherein the first mold part comprises a set of cavities and the second mold part comprises a set of cores, and at least the first or the second mold part comprises at least one additional set of cores or cavities, and a robot comprising a set of receiving means, at least a number of cycles of the method comprising the following steps:
a. injecting plastic into the mold, while it is in a closed condition and at least one set of the cores projects in the closing direction into at least one set of the cavities and simultaneously the articles carried by the additional set of cores or cavities are cooled between the receiving means and the additional set of cores or cavities;
b. thereafter moving in an opening direction at least one of the mold parts relative to the other of the mold parts until an opened position of the mold is reached, with the cores reaching a position entirely clear of the cavities and the articles moving along with the mold part comprising an additional set of cores or cavities, while simultaneously with the moving away of said one mold part from said other mold part, the articles formed during a preceding cycle are transferred from the additional set of cores or cavities to the receiving means;
c. thereafter moving the cores or cavities carrying the formed articles in a direction transverse to the opening direction into a position opposite a cooling and transfer position of receiving means, while at least a number of the additional cores or cavities, whence articles have been transferred to at least a number of the receiving means during this or a preceding cycle, are moved in a direction transverse to the opening direction into a position opposite the cavities and cores, respectively, of said other mold part; and
d. moving at least the one mold part in a closing direction opposite to the opening direction to the other mold part until the closed position of the mold is reached, while another set of the cores reach a position where they project in the closing direction into at least one set of the cavities and simultaneously the set of cores or cavities that carry a set of articles formed during this cycle reach a position where they cooperate with at least a number of the receiving means of the robot or robots.

19. A method according to claim 18, wherein the movement transverse to the closing direction of the set of cores or cavities carrying the formed articles is performed by moving back and forth said one mold part relative to said other mold part in a direction transverse to the closing direction, the formed articles during successive cycles being alternately transferred to the robots located on opposite sides of said other mold part.

20. A method according to claim 18, wherein the movement transverse to the closing direction of the set of cores or cavities carrying the formed articles is performed by rotating the one mold part about a shaft directed parallel to the closing direction.

21. A method according to any one of claims 18-20, wherein the transfer of the additional set of cores or cavities to the receiving means is carried out by arresting the formed articles when the other mold part is being moved away from the one mold part.

22. A method according to claim 21, wherein the articles are arrested after they have moved along with said one mold part over some distance away from said other mold part.

23. A method according to claim 21 or 22, wherein displacements of the means for arresting the articles are driven by relative movements of the mold parts.

24. A method according to any one of claims 18-23, further comprising the steps of:
displacing the receiving means which carry the articles formed during a preceding cycle from the cooling and transfer position to a delivery position for delivering the transferred articles; and
displacing empty receiving means from the delivery position of those receiving means to the cooling and transfer position of those receiving means.

25. A method according to claim 24, wherein the receiving means are moved in vertical direction from the cooling and transfer position.

26. A method according to claim 24 or 25, wherein the displacement of the receiving means from the cooling and transfer position starts in vertical direction and merges into a displacement in horizontal direction.

27. An injection molding apparatus according to any one of claims 18-26, wherein air is sucked in through passages in the receiving means.
